# EUROPEAN PATENT SPECIFICATION

(11) **EP 1 617 941 B1**
(45) Date of publication and mention of the grant of the patent: **13.06.2007**
(21) Application number: 04701716.5
(22) Date of filing: 13.01.2004
(51) Int. Cl.: B01J 3/03, F16J 15/46

(54) **QUICK-CLOSING DOOR FOR PRESSURE VESSELS**
SCHNELLSCHLIESSENDE TÜR FÜR DRUCKBEHÄLTER
PORTE A FERMETURE RAPIDE POUR RECIPIENTS SOUS PRESSION

(30) Priority: 30.04.2003 TR 200300572
(43) Date of publication of application: 25.01.2006
(73) Proprietor: Sistem Teknik Endustriyel Elektronik Sis. San. Ve Tic. Ltd. Sti., 81260 Dudullu, Istanbul (TR)
(72) Inventor: OZDESLIK, Mehmet, 81260 Dudullu, Istanbul (TR); SCHMETZ, Peter, 58706 Menden (DE)
(74) Representative: LENZING GERBER
(86) International application number: PCT/TR2004/000002
(87) International publication number: WO 2004/096427

(56) References cited:
- DE-C- 3 337 092
- FR-A- 2 395 066
- GB-A- 950 440
- GB-A- 1 102 945
- US-A- 4 469 335
- RADCLIFFE E.J.: 'Gas quenching in Vacuum Furnaces- A review of Fundamentals' INDUSTRIAL HEATING vol. NOVEMBER, 1987, pages 33 - 39
- HEILEMANN P.: 'Universell und wirtschaftlich-der neue Vakuumofen mit konvektiver Erwärmung und Hochdruck-Gasabschreckung' TECHNISCHE MITTEILUNGEN, DEGUSSA-DURFERRIT

## Description

### Background of the invention

This kind of door is well known, e.g. it is used for hot-air-autoclaves, autoclaves for steam curing and for heat treatment of metals under protective atmosphere in overpressure- and underpressure ranges of -1/+20 or more bar.

DE 3 337 092 discloses a method for sealing doors of cylindrical pressure vessels, wherein gaskets are mounted between the flange of the vessel body and the flange of the door while pressure is applied to the gaskets through a gas source.

As long as the protective atmosphere is inert, it is no problem to vary the process pressure during operation from underpressure to overpressure and visa versa.

In case, that the protective atmosphere is burnable or explosive when it is mixed with oxygen, safety questions have to be considered.

The quick-closing doors are equipped with a special gasket, which ensures safe operation when the vessel is on overpressure as well as when it is at underpressure. A risk is seen at ambient pressure in the vessel, when no pressure - difference is sealing the gasket.

For safe use of the pressure vessels with quick-closing doors, in case of variable inner pressure from underpressure to overpressure and with burnable atmosphere, e.g. hydrogen, measurements have to be found, which avoid a leakage at ambient pressure, and which give alarm, when a leakage should occur.

### Brief summary of the invention

The aim of the present invention is to propose a sealing system for quick closing doors for pressure vessels, enabling the disadvantages described above to overcome.
The method is to use overpressure between two special gaskets, which keeps the sealing tight, independent of the pressure in the vessel.The function of the sealing will be continuously measured, and a signal of any malfunction would bring the pressure vessel into a safe mode.

### Brief description of the drawings

- **Fig.1**: is a cross section along the center line of the quick-closing door of a pressure vessel in the existing design.
- **Fig. 2**: is showing a sealing area in a larger scale, which does not form part of the invention.
- **Fig. 3**: is a cross section along the center line of the quick-closing door of a pressure vessel with overpressure design.
- **Fig. 4**: is showing the sealing area of Fig. 3 in a larger scale.
- **Fig. 5**: is a front view of a quick-closing door of a pressure vessel.

### Detailed description of the invention

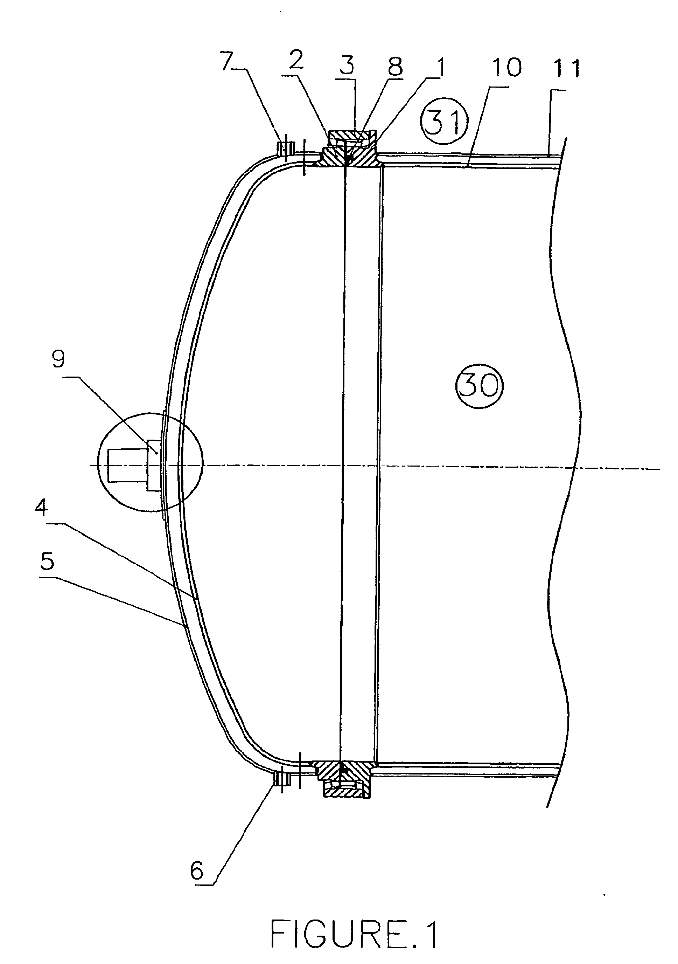

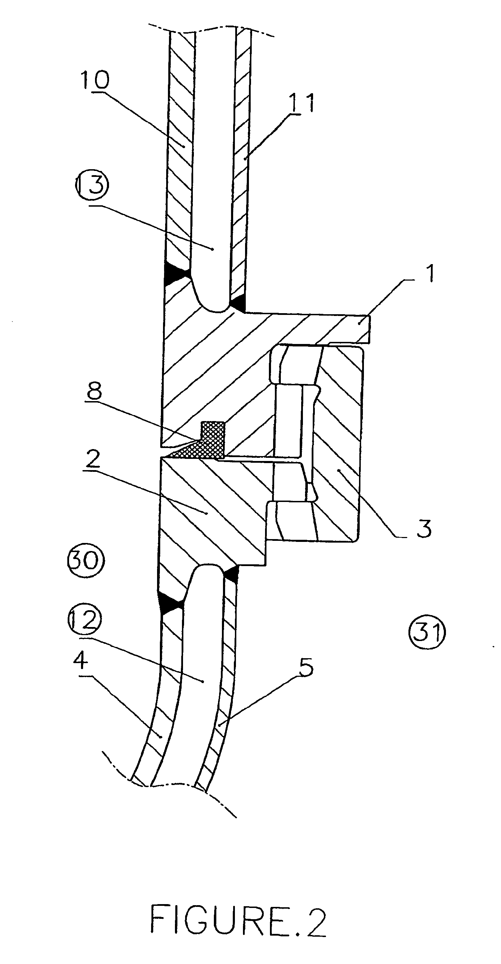

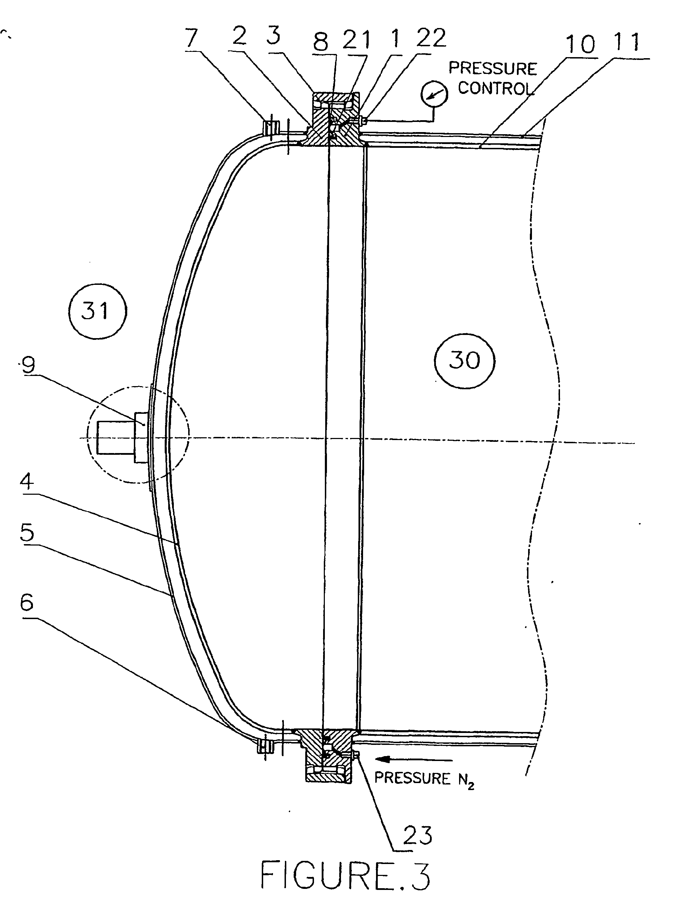

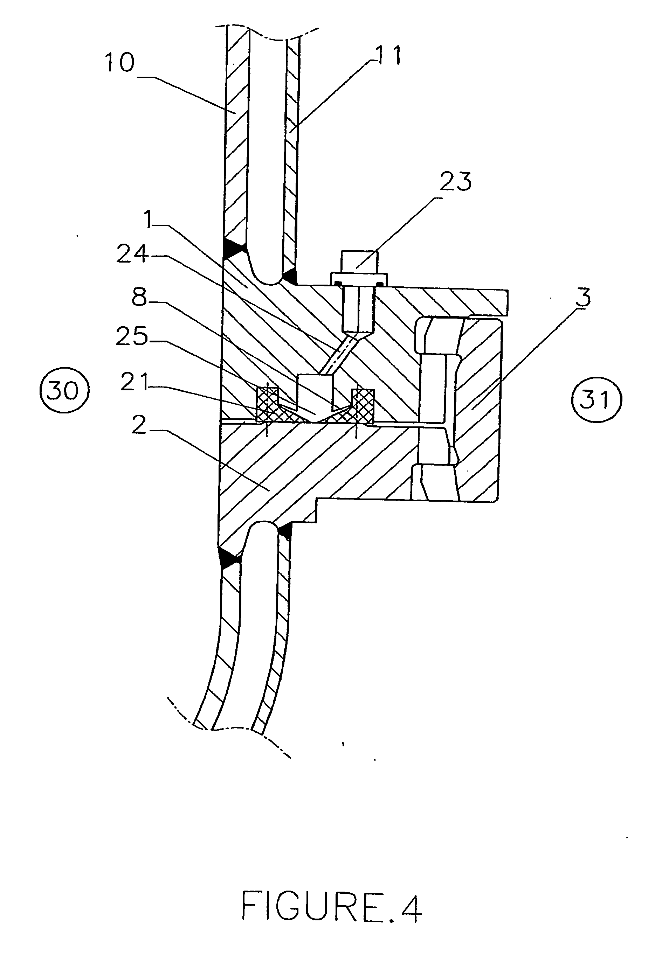

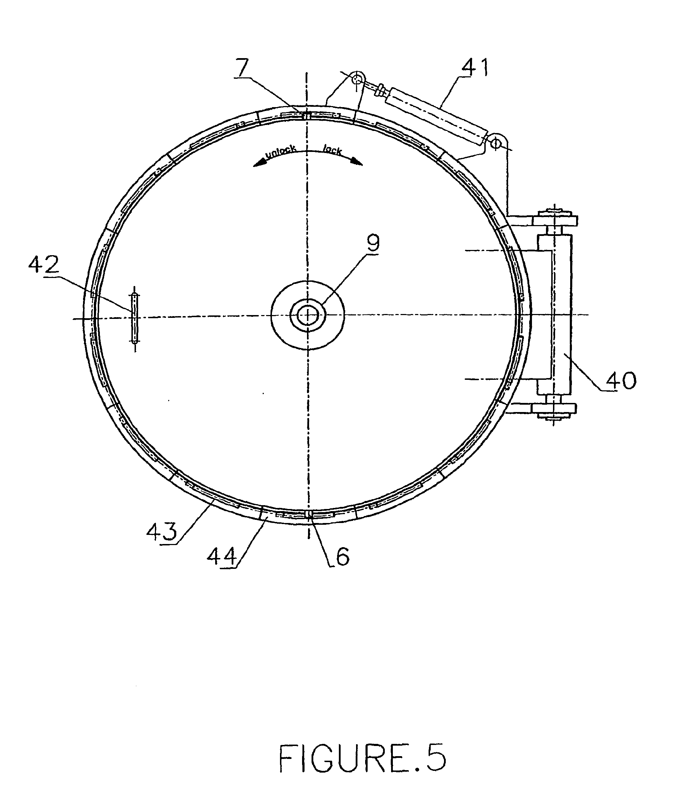

In the various figures, the same reference numbers designate identical elements, e.g. number **1** designates always the flange of the pressure vessel, even when the flange has different design in the figures 1-5.

The invention relates to a method of sealing quick-closing doors 2, **4, 5, 6, 7, 9** for pressure vessels **1, 10, 11** which are locked by a turnable ring 3 and sealed with a lip-gasket **8,** and waterjacket all around **12, 13.**

The inner space **30** of the vessel contains the load which has to be treated, devices for heating, cooling, thermal isolation, an atmosphere of protection-, or reaction-gas, gas circulating and gas guiding systems.

Compared with the ambient atmosphere **31,** the inner pressure can be underpressure, overpressure, or as well ambient pressure.

When the inner pressure is at underpressure, the ambient pressure presses the door towards the gasket and makes it tight.

When the inner pressure is at overpressure, this pressure presses the lip of the gasket to the doorflange **2,** and also makes it tight.

When the inner pressure is at ambient pressure, the sealing in undefined and this can create danger, if the atmosphere consists of burnable gas, e.g. hydrogen.

According to the invention, a method is suggested to get a safe sealing by using two gaskets **8, 21,** and an overpressure space **24, 25,** with a fitting **23** for a connection to a nitrogen source, which supplies a pressure in space **25,** which is 1,2 to 2,0 times so high, as the maximum pressure in the vessel **30.**

The pressure in space 25 will press the lips of the gaskets to the flange 2 of the door, and will give tight sealing of the pressure vessel independent of the inner pressure. The pressure in space 25 will be continuously controlled during the whole process in the vessel, by connecting the pressure space via a fitting 22 with a pressure controller with alarm switch.

In case of any malfunction the vessel will be brought into safe mode, depending on the actual stage of the process in the vessel, which can mean purging with nitrogen or backfilling with nitrogen and/or stopping the process.

For loading and unloading, the door can be opened after bringing the inner pressure and the overpressure spaces at the gaskets to ambient pressure, turning the locking ring **3** with a hydraulic cylinder **41,** till the clamping teeth **44** are in the gaps **43,** by pulling the handle 42 and turning the door around the hinge **40.**

## Claims

1. A method of sealing quick-closing doors for cylindrical pressure vessels for a safe use of these vessels even with an atmosphere of burnable gases (e.g. hydrogen) and with variable inner pressure, like underpressure, ambient pressure and overpressure, **characterized by** using two lip-gaskets (8, 21) between the flange (1) of the pressure vessel body (10) and the flange (2) of the door (4), which are mounted in two concentric grooves in the flange (1) of the pressure vessel (10) around it's longitudinal axis in a way, that the lips face each other, and by having a space (25) between the gaskets (8, 21), which is designed as a third concentric groove, and which is connected to a nitrogen source (23), which supplies a pressure, which is 1.2-2.0 times so high as the maximum pressure in the vessel, in order to press the lips of the gaskets to the flange (2) of the door and giving tight sealing of the vessel independent of the inner pressure, and comprising a tightness-control system (22), by continuously measuring the overpressure between the gaskets (8, 21) and giving a signal, if the pressure value is out of its tolerance, by which a supervisor-system brings the vessel automatically into safe mode, depending on the actual stage of the process in the vessel, which can mean purging with nitrogen or backfilling with nitrogen and/or stopping the process.

## Patentansprüche

1. Verfahren zum verschließen von schnell verschließbaren Türen für zylindrische Druckbehälter für eine sichere Benutzung dieser Behälter sogar mit einer Atmosphäre von brennbaren Gasen (beispielsweise Wasserstoff) und mit variablem inneren Druck, wie Unterdruck, Umgebungsdruck und Überdruck, **gekennzeichnet durch** die Verwendung von zwei Lippendichtungen (8,21) zwischen dem Flansch (1) des Druckbehälterkörpers (10) und dem Flansch (2) der Tür (4), die in zwei konzentrischen Nuten in dem Flansch (1) des Druckbehälters (10) um dessen Längsachse derart montiert sind, dass die Lippen einander gegenüber liegen, und **durch** einen Raum (25) zwischen den Dichtungen (8,21), der als eine Dritte konzentrische Nut ausgestaltet ist, und der mit einer Stickstoffquelle (23) verbunden ist, die einen Druck liefert, der 1,2 - 2,0 mal so hoch ist wie der Maximaldruck in dem Behälter, um die Lippen der Dichtungen an den Flansch (2) der Tür zu pressen und einen dichten Abschluss des Behälters unabhängig von dem Innendruck zu bewirken, und mit einem Dichtigkeitskontrollsystem (22) mit kontinuierlicher Messung des Überdrucks zwischen den Dichtungen (8, 21) und der Abgabe eines Signals, wenn der Druckwert sich außerhalb seiner Toleranz befindet, wodurch ein Überwachungssystem den Behälter automatisch in einen sicheren Betriebszustand bringt, abhängig von dem aktuellen Schritt des Prozesses in dem Behälter, was das Spülen mit Stickstoff oder das Auffüllen mit Stickstoff und/oder das Abrechen des Prozesses bedeuten kann.

## Revendications

1. Procédé de fermeture hermétique de portes à fermeture rapide pour des récipients cylindriques sous pression, permettant une utilisation sans risques de ces récipients, même avec une atmosphère de gaz combustibles (p.ex. l'hydrogène) et avec une pression intérieure variable, comme des conditions de sous-pression, de pression ambiante et de surpression, **caractérisé par** l'utilisation de deux joints à lèvres (8, 21) entre la bride (1) du corps de récipient sous pression (10) et la bride (2) de la porte (4), qui sont montés dans deux rainures concentriques présentes dans la bride (1) du récipient sous pression (10) autour de son axe longitudinal, de telle sorte que les lèvres se fassent face, et par la présence d'un espace (25) entre les joints (8, 21), qui est conçu comme une troisième rainure concentrique, et qui est relié à une source d'azote (23) qui fournit une pression de 1,2 à 2,0 fois aussi importante que la pression maximum à l'intérieur du récipient, afin d'appuyer les lèvres des joints sur la bride (2) de la porte et permettre une fermeture hermétique du récipient, quelle que soit la pression intérieure, et comprenant un système de commande d'étanchéité (22) qui mesure en continu la surpression entre les joints (8, 21) et donne un signal si la valeur de pression se situe en-dehors de sa plage de tolérance, un système de supervision faisant automatiquement passer le récipient en mode sécurité, en fonction de la phase du procédé qui se déroule à l'intérieur du récipient, ce qui peut signifier la purge avec de l'azote ou le remplissage avec de l'azote et/ou l'arrêt du procédé.
